# EUROPÄISCHE PATENTSCHRIFT

(11) **EP 2 110 553 B1**
(45) Veröffentlichungstag und Bekanntmachung des Hinweises auf die Patenterteilung: **23.10.2019**
(21) Anmeldenummer: 09010086.8
(22) Anmeldetag: 13.12.2004
(51) Int. Cl.: F03D 80/10, E04H 12/08

(54) **WINDENERGIEANLAGE MIT EINEM HINDERNISFEUER**
WIND POWER PLANT COMPRISING A FLIGHT OBSTACLE LIGHT
EOLIENNE COMPRENANT UN FEU D'OBSTACLE

(30) Priorität: 15.12.2003 DE 10358962
(43) Veröffentlichungstag der Anmeldung: 21.10.2009
(62) Teilanmeldung aus: 04029446.4
(73) Patentinhaber: Senvion GmbH, 22297 Hamburg (DE)
(72) Erfinder: Schäfer, Stephan, 32479 Hille (DE); Book, Markus, 24118 Kiel (DE)
(74) Vertreter: Glawe, Delfs, Moll

(56) Entgegenhaltungen:
- DE-A1- 10 164 524
- DE-U1- 8 701 881
- JP-A- 11 182 409
- JP-A- 2002 279 802
- US-A1- 2002 102 161
- "Diffused light at blade point on wind machine - is fed from source adjacent turbine shaft via lens conducting it to fibre=optic channel end", DERWENT, 26. Mai 1984 (1984-05-26), XP002231751,

## Beschreibung

Die vorliegende Erfindung betrifft eine Windenergieanlage mit einem Turm, der mindestens eine nach außen wellenabstrahlende elektrische Komponente aufweist.

Bei einer wellenabstrahlenden Komponente kann es sich z. B. um ein Hindernisfeuer handeln, wie es gemäß der Verwaltungsrichtlinie für die Kennzeichnung von Luftftahrthindernissen zukünftig für eine Windenergieanlage, die eine Gesamthöhe von mehr als 150 m über Grund und Wasser aufweist, in einer Höhe von 40 ± 5 m vorgesehen sein muss, deren Lichtstärke 10- 15 cd betragen soll.

Das Vorsehen von z. B. einer Hindernisbefeuerung an dem Turm einer Windenergieanlage bringt Probleme mit sich. Denkbar wäre zum Beispiel drei bzw. vier Leuchten außen am Turm zu befestigen, die über eine außen am Turm verlaufende Versorgungsleitung versorgt werden. Hierbei ergeben sich aber zum einen Probleme hinsichtlich der Wartung, da, um ein Leuchtmittel oder aber die Versorgungsleitung zu tauschen oder zu warten, mit einem Steiger oder einem Kran bis auf max. 45 m Höhe gefahren werden muss. Dies ist insbesondere bei Offshore-Anlagen in der Regel nicht durchführbar. Zum anderen kann es aufgrund von Witterungseinflüssen, insbesondere bei Offshore-Anlagen, die stark salzhaltiger Luft ausgesetzt sind, zu Korrosions- oder ähnliche Zersetzungsvorgängen kommen, die insbesondere bei den Versorgungsleitungen aufgrund ihrer erheblichen Länge zu hohen Wartungs- und Reparaturkosten führen können.

Aus der JP 2002-279802 ist eine Hindernisbefeuerung mit mehreren Hindernisfeuern bekannt, die mit einer Versorgungseinrichtung verbunden sind, wobei die Versorgungsleitung durch in dem Turm vorgesehene Durchbrüche von Innen nach Außen geführt ist.

Das Vorsehen eines oder auch mehrerer Durchbrüche in dem Turm einer Windenergieanlage, wie es in der JP 2002-279802 A beschrieben ist, wurde bisher immer vermieden, da insbesondere Türme von Windenergieanlagen aufgrund ihrer Funktion und Ausbildung besonders hohen mechanischen Belastungen ausgesetzt sind und Durchbrüche zusätzlich zu einer Schwächung der Turmstabilität führen würden. Es wurde die Auffassung vertreten, dass das Vorsehen eines oder mehrerer Durchbrüche in einem Turm nur mit einem in diesem Bereich wesentlich stärker zu dimensionierenden Turms möglich ist. Dies würde aber zu erheblichen Mehrkosten führen, die unbedingt vermieden werden sollen, da der Turm einer Windenergieanlage an sich schon einen hohen Kostenfaktor darstellt.

Aufgabe der vorliegenden Erfindung ist die Schaffung einer Windenergieanlage mit einem Turm, bei der in einfacher und kostengünstiger Weise eine nach außen wellenabstrahlende elektrische Komponente in den Turm integrierbar ist, die zusätzlich geringen Wartungsaufwand erfordert.

Gelöst wird die Aufgabe mit einer Windenergieanlage, die die kennzeichnenden Merkmale des Anspruchs 1 aufweist.

Erfindungsgemäß ist vorgesehen, dass der Turm aus mehreren übereinander anordenbaren Segmenten besteht, die über mindestens eine Verbindungseinrichtung miteinander verbunden sind., wobei der Durchbruch in der Verbindungseinrichtung angeordnet ist und die Anordnung des Durchbruchs in der Verbindungseinrichtung und/ oder die Abmessungen des Durchbruchs so gewählt sind, dass Stabilität und Funktion des Turmes nicht beeinträchtigt werden.

Die vorliegende Erfindung bietet den Vorteil, dass die Versorgungsleitung im Inneren des Turms geführt werden kann und erst in Höhe der nach außen wellenabstrahlenden elektrischen Komponente durch den Durchbruch aus dem Turm herausgeführt werden muß.

Bei der vorliegenden Erfindung ist erkannt worden, dass im Turm einer Windenergieanlage unter bestimmten Bedingungen durchaus ein Durchbruch vorgesehen werden kann, ohne den Turm wesentlich stärker dimensionieren zu müssen oder eine Schwächung des Turms zu bewirken, nämlich dann, wenn der Durchbruch in einem ohnehin bereits versträkten Bereich des Turmes angeordnet ist. Ein solcher Bereich sind die Verbindungseinrichtungen der einzelnen Segmente die im Gegensatz zur Wandstärke des Turmes bereits stärker dimensioniert sind.

Es werden für Windenergieanlagen im allgemeinen zwei Typen von Türmen eingesetzt, nämlich Betontürme oder Stahlrohrtürme. Neuerdings werden aufgrund der zunehmenden Größe der Windenergieanlagen aber wieder auch Gittertürme eingesetzt, da diese besser zu transportieren sind.

Die Türme bestehen aus Transportgründen in der Regel aus übereinander anordenbaren Segmenten, die über Verbindungseinrichtungen miteinander verbindbar sind. Die Segmente von Betontürmen bestehen aus Betonröhren, in denen eine Armierung eingebettet ist. Bei Stahlrohrtürmen bestehen die Segmente, aus Stahlrohrabschnitten, die als Verbindungseinrichtung an ihren oberen und unterem Ende Flansche aufweisen, die beispielsweise mittels Schrauben verbunden werden können.

Das Vorsehen eines Durchbruchs in einem Betonturm ist nicht so problematisch wie in einem Stahlrohrturm, da die Stabilität eines Betonturms durch einen Durchbruch nicht so stark geschwächt wird, wie es bei einem Stahlrohrturm der Fall ist. Bei einem Betonturm ist beim Einbringen des Durchbruchs, neben der Tatsache, dass die Abmessungen des Durchbruchs möglichst klein gehalten werden sollten, im wesentlichen darauf zu achten, dass die Armierung nicht beschädigt wird.

Bei einem Stahlrohrturm stellt sich demgegenüber das Problem, dass das Vorsehen eines Durchbruchs immer in dem Bereich des Durchbruchs eine Kerbwirkung zur Folge hat, die zu einer Schwächung des Turmes führt. Aufgrund dessen gab es bislang bei einem Stahlrohrturm nur die Möglichkeit den Bereich um die Durchbrüche großflächig zu verstärken, um damit auch die Kerbwirkung gering zu halten.

Die Erfindung bietet besonders im Hinblick auf die Stahlrohrtürme große Vorteile, da, wie oben bereits erwähnt, die Segmente bei Stahlrohrtürmen über Flansche, die über Schrauben miteinander verbunden werden erfolgt. Die Flansche sind aufgrund der für die Schrauben notwendigen Bohrungen ohnehin stärker dimensioniert, so dass hier die Möglichkeit besteht auch noch einen oder mehrere Durchbrüche anzuordnen.

Besonders vorteilhaft ist es, den oder die Durchbrüche im Bereich der Auflageflächen der beiden aufeinanderliegenden Flansche der Segmente vorzusehen. Es wäre aber auch denkbar, den Durchbruch in der sogenannten "neutralen Faser" eines Flansches anzuordnen, da dieser Bereich des Flansches gering belastet ist und somit das Vorsehen eines Durchbruchs keine kritischen Spannungsüberhöhungen bewirken würden.

Gemäss bevorzugter Ausgestaltungen der Erfindung ist vorgesehen, dass das Hindernisfeuer über die Versorgungsleitung mit einer Versorgungseinrichtung verbunden ist. Dabei kann die Versorgungsleitung so ausgebildet sein, dass sie mindestens einen Lichtwellenleiter aufweist. Grundsätzlich ist aber an jede elektrische Komponente gedacht, die akkustische oder elektromagnetische Wellen gleich welcher Frequenz (z. B: auch Infrarotstrahlung).

Gemäß weiterer bevorzugter Ausgestaltungen des Erfindung ist vorgesehen, dass das Hindernisfeuer über die Versorgungsleitung mit einer Versorgungseinrichtung verbunden ist. Dabei kann die Versorgungsleitung so ausgebildet sein, dass sie mindestens einen Lichtwellenleiter aufweist.

Selbstverständlich ist aber auch denkbar, dass es sich bei den Versorgungsleitungen um elektrische Leitungen handeln kann, die eine elektrische Energiequelle mit einem elektrische Hindernisfeuer verbinden.

Gemäß einer weiteren vorteilhaften Ausgestaltung der Erfindung können durch den Durchbruch neben der oder den Versorgungsleitungen für das oder die Hindernisfeuer auch noch andere Leitungen verlegt sein. Andere Leitungen können z .B. allgemeine Kabeldurchführungen sein. Vorstellbar sind auch Kabeldurchführungen von an dem Turm angeordneten Mobilfunkantennen oder aber auch Versorgungsleitungen für jede Art von Außenbeleuchtung unter anderem z. B. Werbeflächen.

Erfindungsgemäß ist hier vorgesehen, dass das Hindernisfeuer über die Versorgungsleitung mit einer Versorgungseinrichtung verbunden ist, wobei die Versorgungseinrichtung aus mindestens einem Lichtwellenleiter besteht und die Versorgungseinrichtung als Lichtquelle ausgebildet ist und die Anordnung des Durchbruchs und/ oder die Abmessungen des Durchbruchs so gewählt sind, dass Stabilität und Funktion des Turms nicht beeinträchtigt werden.

Der Einsatz von Lichtwellenleitern als Hindernisfeuer ist ohne weiteres möglich, da, wie oben bereits erwähnt, die Lichtstärke bei Hindernisfeuern lediglich 10-15 cd betragen muss, die mit bekannter Lichtwellenleitertechnologie ohne weiteres erreichbar ist. Weiterhin weisen Lichtwellenleiter einen sehr kleinen Querschnitt auf.

Die Verwendung von Lichtwellenleitern anstelle anderer Versorgungsleitungen bietet daher den großen Vorteil, dass der in dem Turm anzuordnende Durchbruch nur einen sehr kleinen Querschnitt aufweisen muss. Ein Durchbruch mit einem sehr kleinen Querschnitt ermöglicht, dass die Schwächung des Turmes aufgrund des kleinen Durchbruchs erheblich geringer ausfällt als z. B. eine Turm mit den Abmessungen eines Durchbruchs wie er aus der JP 2002-279802 bekannt ist.

Entsprechend bietet der kleine Durchbruch den Vorteil, dass eine Verstärkung des Turmes zur Ausgleich der Turmschwächung im Bereich des Durchbruchs sehr viel kleiner ausfällt, wodurch erhebliche Kosten bei der Turmherstellung eingespart werden können. Zusätzlich besteht auch die Möglichkeit, dass der Durchbruch an beliebigen Stellen des Turmes vorgesehen werden kann. Er muss also nicht zwingend im Bereich einer Verbindungseinrichtung vorgesehen werden. Diese Ausführung eignet sich als insbesondere für Anordnungen beiden die elektrische Komponenten nicht in Höhe der Verbindungseinrichtung montiert werden kann.

In der Regel sollen am Turm einer Windenergieanlage drei bis vier Hindernisfeuer auf dem Umfang verteilt vorgesehen werden. Hinsichtlich der erforderlichen Anzahl der Durchbrüche im Turm ist denkbar pro Hindernisfeuer einen Durchbruch vorzusehen oder aber nur einen Durchbruch vorzusehen, durch den alle, für die Versorgung der Hindernisfeuer notwendigen Versorgungsleitungen geführt werden, die dann um den Turm herum zu den entsprechenden Hindernisfeuern geführt werden. Selbstverständlich ist es auch denkbar, zwei Durchbrüche für vier Hindernisfeuer etc. vorzusehen.

Alle der oben beschriebenen Möglichkeiten weisen Vorteile auf. So können zum Beispiel beim Vorsehen eines Durchbruchs pro Hindernisfeuer die Abmessungen des Durchbruchs kleiner ausgebildet werden, als bei einem Durchbruch durch den mehrere Versorgungsleitungen geführt werden sollen. Demgegenüber ist für den Fall, dass alle Versorgungsleitungen durch einen Durchbruch geführt werden, nur ein Durchbruch im Turm erforderlich, der die Stabilität und Funktion beeinträchtigen kann.

Die Vorteile der beiden Alternativlösungen werden durch die Beschreibung weiterer Ausgestaltungen der Erfindung im folgenden noch verdeutlicht.

Es besteht die Möglichkeit, dass die Enden eines Lichtwellenleiters der durch einen Durchbruch aus dem Inneren des Turms nach außen geführt wird, ein Hindernisfeuer bildet. In einer bevorzugten Ausgestaltung der Erfindung kann das Hindernisfeuer aber auch ein Prisma oder ein Linsensystem aufweisen, das mit einem Lichtwellenleiter verbunden ist. Diese Ausgestaltung bietet den Vorteil, dass das Licht durch das Prisma in vorbestimmten Abstrahlwinkeln fokussierbar ist.

Zur Versorgung der Lichtwellenleiter ist gemäss einer weiteren Ausgestaltung der Erfindung vorgesehen, dass die Versorgungseinrichtung eine Lichtquelle ist, wobei die Lichtquelle gemäss einer weiteren vorteilhaften Ausgestaltung der Erfindung aus leistungsstarken LEDs besteht. LEDs bieten den grossen Vorteil, dass sie extrem langlebig und wartungsarm sind.

Gemäss einer weiteren bevorzugten Ausgestaltung der Erfindung ist vorgesehen, die Versorgungseinrichtung im Turm anzuordnen. Diese Ausgestaltung bietet den Vorteil, dass die Versorgungseinrichtung nicht den Witterungseinfüssen ausgesetzt ist. In einer weiteren bevorzugten Ausgestaltung der Erfindung ist vorgesehen, dass die Versorgungseinrichtung in Höhe der Durchbrüche angeordnet ist. Diese Ausgestaltung bietet den Vorteil, dass die erforderlichen Versorgungsleitungen so kurz wie möglich ausgebildet werden, so dass auf diese Weise Materialkosten eingespart werden können. Die Versorgungseinrichtung kann zum Beispiel auf einer im Turm befestigen Plattform angeordnet sein. Es ist aber auch denkbar, die Versorgungsleitung an Seilen hängend im Turm anzuordnen.

Im folgenden soll die Erfindung anhand eines Ausführungsbeispiels näher erläutert werden. Es zeigen:
- Fig 1: Windenergieanlage in Frontansicht mit einer am Turm angeordneten Hindernisbefeuerung
- Fig 2: Windenergieanlage in Seitenansicht mit einer am Turm angeordneten Hindernisbefeuerung
- Fig 3: Schnitt entlang der Linie 1-1 in Fig 1
- Fig 4: Teilansicht eines Schnitt entlang der Linie 2-2 in Fig 3

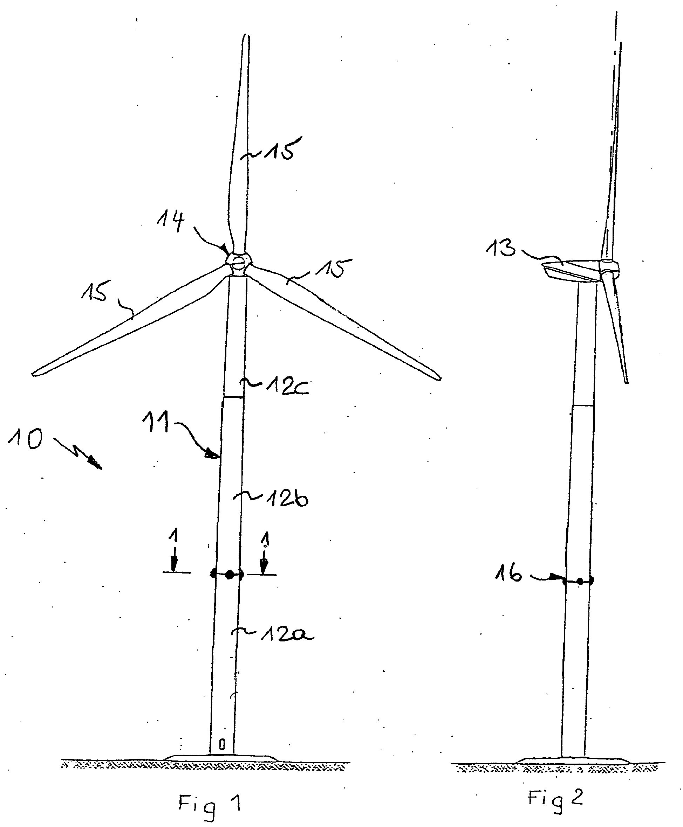

In der Fig 1 ist eine Windenergieanlage 10 in Frontansicht und in der Fig 2 ist eine Windenergieanlage in Seitenansicht dargestellt. Die Windenergieanlage 10 weist einen Turm 11 auf, der aus mehreren übereinander angeordneten Segmenten 12a, 12b, 12c besteht. Auf dem Turm 11 ist eine, nur in Fig 2 sichtbare Gondel 13 angeordnet, an der drehbar ein Rotor 14 mit drei Rotorblättern 15 gelagert ist. An dem Turm 11 ist in einer Höhe die ca. 40 m entspricht eine Hindernisbefeuerung 16 angeordnet.

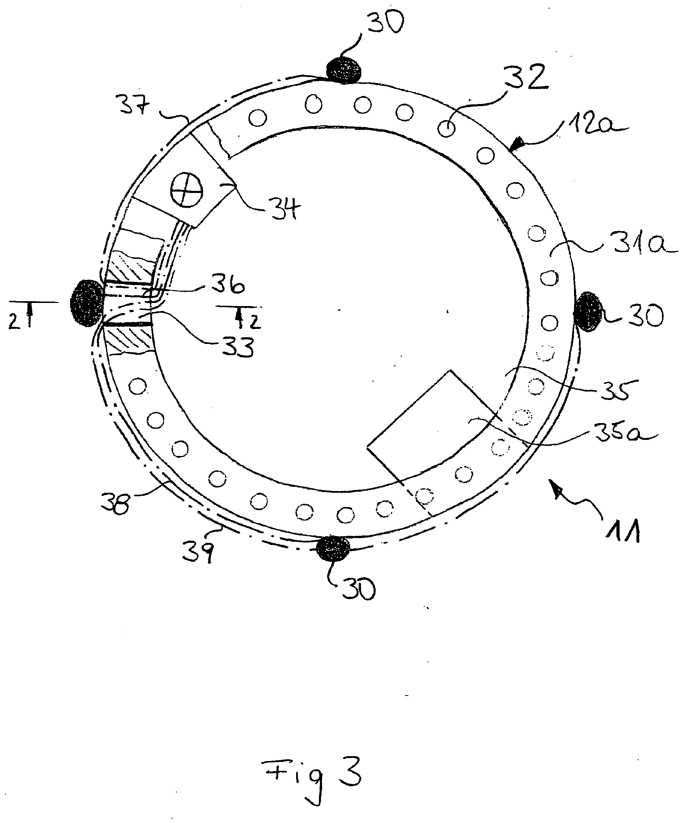

Die Fig 3 zeigt in einer Schnittdarstellung eine Aufsicht auf das Segment 12a. An dem Segment 12a sind vier, nach außen abstrahlende Hindernisfeuer 30 in gleichmäßigen Abstand um den Turm herum angeordnet. Das Segment 12a weist an seinem oberen Ende einen Flansch 31a auf. In dem Flansch 31a sind mehrere Schraubenlöcher 32 kreisförmig angeordnet, zur Aufnahme der Schrauben der Verbindung mit dem Flansch 31b des Segments 12b, wobei die Schrauben, der Flansch 31b und das Segment 12b in dieser Darstellung nicht sichtbar sind.
In dem Flansch 31a ist ein Durchbruch 33 vorgesehen. Weiterhin ist in der Fig 3 eine Lichtquelle 34 dargestellt, die auf einer Plattform 35 angeordnet, die durchgehend unterhalb des Flansches 31a verläuft. In der Plattform 35 ist eine Durchstiegsöffnung 35a vorgesehen, durch die unter anderem auch die Aufstiegsleiter geführt wird, damit Arbeiter auf die Plattform 35 oder aber auch zu höher gelegenen Bereichen der Windenergieanlage gelangen können.

Von der Lichtquelle 34 gehen vier als Lichtwellenleiter 36, 37, 38, 39 ausgebildete Versorgungsleitungen ab. Die Lichtwellenleiter 36, 37, 38, 39 werden durch den Durchbruch 33 zu den Hindernisfeuern 30 geführt, wobei ein erster Lichtwellenleiter 36 direkt mit einem am Durchbruch 33 liegenden Hindernisfeuer 30 verbunden wird und die anderen drei Lichtwellenleiter 37, 38 und 39 werden außen an der Wand des Segments 12a entlang zu den verbleibenden drei Hindernisfeuern 30 geführt.

Die Fig 3 ist nicht maßstabsgetreu dargestellt. Insbesondere der Durchbruch 33 ist zur Veranschaulichung der Erfindung relativ breit dargestellt, real wird er nur wenige Millimeter bis einige Zentimeter betragen.

Besonders belastungsarm wird der Durchbruch 33 ausgeführt, indem er genau radial verlaufend mittig zwischen zwei benachbarten Schrauben angeordnet wird. Weiterhin kann der Durchbruch 33 um 90° verdreht zur Hauptwindrichtung angeordnet sein, wodurch er in der neutralen Faser der Turmbiegung bei Wind aus der Hauptwindrichtung liegt.

Die Befestigung der Hindernisfeuer 30 am Turm 11 kann beispielsweise durch Klebeverbindungen erfolgen. Auch bestünde die Möglichkeit die Hindernisfeuer an der Turmwand anzuschweißen. Denkbar wäre auch die Versorgungsleitungen so auszuführen, dass sie in der Lage sind, ein Hindernisfeuer zu halten. Bei einer Anordnung der Hindernisfeuer in Flanschhöhe wäre es auch möglich die Hindernisfeuer an der Stirnfläche des Flansches über Schraubenverbindungen zu befestigen. Eine weitere vorteilhafte Ausgestaltung sieht die Befestigung an Spannbänder vor, die den gesamten Turm umfassen und mittels einer Spannvorrichtung verspannt werden.

Insbesondere für Offshore-Anlage, die bei schlechten Wetterverhältnissen nur schwer zu erreichen sind, wird versucht, Windenergieanlagen redundant auszulegen, damit die Anlage auch bei einem Störungsfall weiterbetrieben werden kann. In diesem Zusammenhang bietet es sich an, auch die Versorgungsleitungen der Hindernisfeuer doppelt auszulegen. So kann beispielsweise gegenüber dem, in der Fig 3 dargestellten Durchbruch 33 ein weiterer Durchbruch vorgesehen sein, durch den zu den bereits vorgesehenen, jeweils eine weitere Versorgungsleitung zu den einzelnen Hindernisfeuern geführt werden. Es bestünde dann die Möglichkeit, dass beide Versorgungsleitungen gemeinsam das Hindernisfeuer versorgen oder aber, dass die redundante Versorgungsleitung erst dann aktiviert wird, wenn die erste Versorgungsleitung defekt ist.

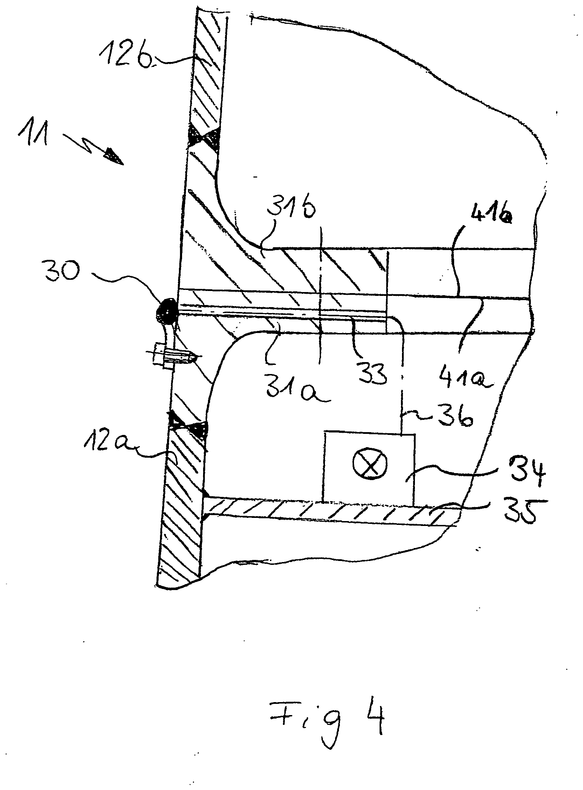

Die Fig 4 zeigt ein unteres Segment 12a und ein oberes Segment 12b des Turmes 11. Das obere Segment 12b weist an seinem unteren Ende einen unteren Flansch 31b auf, der mit einem oberen Flansch 31a des unteren Segments 12a über nicht dargestellte Schrauben verbunden ist.

In dem dargestellten Ausführungsbeispiel ist zu erkennen, dass der Durchbruch 33 in dem unteren Flansch 31a angeordnet ist. Unterhalb der Flansche 31a und 31b ist auf der Plattform 35 die Lichtquelle 34 angeordnet, die über, hier einzeln dargestellten Lichtwellenleiter 36 mit dem in Höhe des Durchbruchs 33 angeordneten Hindernisfeuer 30 verbunden ist. Das Hindernisfeuer ist über eine Lasche 42 und einer Schraube 43 an dem Flansch 31a befestigt..

Es wäre aber auch denkbar, dass der Durchbruch in Form einer Nut ausgebildet ist, die in der Auflagefläche 41a des unteren Flanschs 31a des Segments 12a, die in Kontakt mit der Auflagefläche 41b des oberen Flanschs 31b ist, angeordnet ist.

Die Nut könnte auch so ausgebildet sein, das sie sich über beide Flansche 31a, 31b erstreckt. Diese Ausführung bietet den Vorteil, dass jeder Flansch nur minimal konstruktiv verändert werden muss, da jeder Flansch nur einen halben Durchbruch ausbildet.

Die beiden Flansche 31a und 31b können auch so ausgebildet sein, dass im Bereich der zwischen den beiden Flanschen 31a und 31b zum Beispiel eine minimale Fuge entsteht, die dann als Durchbruch genutzt werden kann, so dass in den Segmenten oder den Flanschen des Turms 11 kein Durchbruch mehr vorgesehen werden muss. Die Fuge könnte zum Beispiel durch entsprechend ausgebildete und zwischen den Auflageflächen 41a und 41b der Flansche 31a und 31b angeordnete Distanzstücke gebildet werden.

Die Montage des Hindernisfeuers könnte zum Beispiel schon während des Turmaufbaus erfolgen. Ist zum Beispiel in der Auflagefläche als Durchbruch eine Nut vorgesehen, so könnte nachdem das Segment 12a errichtet worden ist, die Versorgungsleitung in der Nut angeordnet werden und mit z.B Silikon abgedichtet werden. Gleichzeitig könnte auch schon das Hindernisfeuer am Turm befestigt werden und mit der Versorgungsleitung verbunden werden. Anschließend wird das Segment 12b auf dem Segement 12a angeordnet und beide miteinander verschraubt. Möglich wäre auch, erst beide Segmente 12a und 12b übereinander anzuordnen und die Versorgungsleitung nach der Verschraubung der beiden Flansche durch die Nut oder einen Durchbruch nach außen zu führen.

## Patentansprüche

1. Windenergieanlage mit einem Turm (11), der mindestens ein nach außen abstrahlendes Hindernisfeuer (30) aufweist, das mit einer Versorgungsleitung (36) verbunden ist, die über einen in dem Turm vorgesehenen Durchbruch von Innen nach Außen geführt ist wobei das Hindernisfeuer über die Versorgungsleitung mit einer Versorgungseinrichtung verbunden ist, **dadurch gekennzeichnet, dass** die Versorgungsleitung aus mindestens einem Lichtwellenleiter besteht und die Versorgungseinrichtung als Lichtquelle ausgebildet ist und die Anordnung des Durchbruchs und/ oder die Abmessungen des Durchbruchs so gewählt sind, dass Stabilität und Funktion des Turms nicht beeinträchtigt werden.

2. Windenergieanlage nach Anspruch 1, **dadurch gekennzeichnet, dass** der Turm (11) mehrere Hindernisfeuer aufweist, wobei alle Versorgungsleitungen über einen Durchbruch von Innen nach Außen geführt sind.

3. Windenergieanlage nach Anspruch 1, **dadurch gekennzeichnet, dass** der Turm mehrere Hindernisfeuer aufweist, wobei die Versorgungsleitungen über mehrere Durchbrüche von Innen nach Außen geführt sind.

4. Windenergieanlage nach Anspruch 1, **dadurch gekennzeichnet, dass** die Versorgungseinrichtung in dem Turm angeordnet ist.

5. Windenergieanlage nach Anspruch 1, **dadurch gekennzeichnet, dass** die Versorgungseinrichtung im wesentlichen in Höhe der Durchbrüche angeordnet ist.

6. Windenergieanlage nach Anspruch 1, **dadurch gekennzeichnet, dass** das Hindernisfeuer (30) ein Prisma oder ein Linsensystem aufweist.

## Claims

1. Wind power plant comprising a tower (11) which has at least one flight obstacle light (30) radiating outwards, which is connected to a supply line (36) that is led from inside to outside via an aperture provided in the tower, the flight obstacle light being connected via the supply line to a supply device, **characterized in that** the supply line consists of at least one optical waveguide and the supply device is formed as a light source, and the arrangement of the aperture and/or the dimensions of the aperture are chosen such that stability and function of the tower are not impaired.

2. Wind power plant according to Claim 1, **characterized in that** the tower (11) has multiple flight obstacle lights, wherein all the supply lines are led from inside to outside via an aperture.

3. Wind power plant according to Claim 1, **characterized in that** the tower has multiple flight obstacle lights, wherein the supply lines are led from inside to outside via multiple apertures.

4. Wind power plant according to Claim 1, **characterized in that** the supply device is arranged in the tower.

5. Wind power plant according to Claim 1, **characterized in that** the supply device is arranged substantially at the height of the apertures.

6. Wind power plant according to Claim 1, **characterized in that** the flight obstacle light (30) has a prism or a lens system.

## Revendications

1. Éolienne avec une tour (11) présentant au moins un feu d'obstacle (30) rayonnant vers l'extérieur, qui est connecté à une ligne d'alimentation (36), laquelle est conduite de l'intérieur vers l'extérieur par un passage prévu dans la tour, le feu d'obstacle étant connecté par le biais de la ligne d'alimentation à un dispositif d'alimentation,
**caractérisée en ce que** la ligne d'alimentation se compose d'au moins un guide d'ondes optiques et le dispositif d'alimentation est réalisé sous forme de source de lumière, et l'agencement du passage et/ou les dimensions du passage sont choisis de telle sorte que la stabilité et le fonctionnement de la tour ne soient pas affectés.

2. Éolienne selon la revendication 1, **caractérisée en ce que** la tour (11) présente plusieurs feux d'obstacle, toutes les lignes d'alimentation étant conduites de l'intérieur vers l'extérieur par un passage.

3. Éolienne selon la revendication 1, **caractérisée en ce que** la tour présente plusieurs feux d'obstacle, les lignes d'alimentation étant conduites de l'intérieur vers l'extérieur par plusieurs passages.

4. Éolienne selon la revendication 1, **caractérisée en ce que** le dispositif d'alimentation est disposé dans la tour.

5. Éolienne selon la revendication 1, **caractérisée en ce que** le dispositif d'alimentation est disposé essentiellement à la hauteur des passages.

6. Éolienne selon la revendication 1, **caractérisée en ce que** le feu d'obstacle (30) présente un prisme ou un système de lentilles.
